# EUROPÄISCHE PATENTSCHRIFT

(11) **EP 3 279 051 B1**
(45) Veröffentlichungstag und Bekanntmachung des Hinweises auf die Patenterteilung: **21.02.2024**
(21) Anmeldenummer: 17182901.3
(22) Anmeldetag: 25.07.2017
(51) Int. Cl.: B60W 30/165, B60W 30/095, B60W 10/04, B60W 10/18, B60W 10/20, B60W 50/08, B60W 50/10, B60W 30/16, B60K 31/00

(54) **STEUERUNGS-SYSTEM UND STEUERUNGS-VERFAHREN ZUR AUSWAHL UND VERFOLGUNG EINES KRAFTFAHRZEUGS**
CONTROL SYSTEM AND CONTROL METHOD FOR SELECTING AND TRACKING A MOTOR VEHICLE
SYSTÈME DE COMMANDE ET PROCÉDÉ DE COMMANDE DESTINÉ À SÉLECTIONNER ET À SUIVRE UN VÉHICULE AUTOMOBILE

(30) Priorität: 01.08.2016 DE 102016009302
(43) Veröffentlichungstag der Anmeldung: 07.02.2018
(73) Patentinhaber: Lucas Automotive GmbH, 56070 Koblenz (DE)
(72) Erfinder: Oska, Bjoern, 56070 Koblenz (DE); Altendorfer, Richard, 56070 Koblenz (DE); Ledovskich, Daniel, 56626 Andernach (DE); Schwarz, Christian, 56727 Mayen (DE); Jöbgen, Benedikt, 53489 Sinzig-Bad Bodendorf (DE)

(56) Entgegenhaltungen:
- EP-A2- 1 315 980
- EP-A2- 1 977 947
- DE-A1-102010 023 196
- DE-A1-102012 210 145
- US-A1- 2015 100 217

## Beschreibung

### Hintergrund der Erfindung

Hier werden ein Steuerungs-System und ein Steuerungs-Verfahren zur Auswahl und Verfolgung eines Kraftfahrzeugs offenbart. Dieses System und Verfahren basiert insbesondere auf einer Umfeldsensorik in Kraftfahrzeugen und unterstützt einen Fahrer oder ein autonom fahrendes Kraftfahrzeug. Beispielsweise wird ein geeignetes anderes Kraftfahrzeug aus möglichen Kraftfahrzeugen ausgewählt.

### Stand der Technik

Bei einer Geschwindigkeitsregelung in einem Kraftfahrzeug, die den Abstand zu einem vorausfahrenden Kraftfahrzeug regelt, sowie bei einem Notbremsassistenten in einem Kraftfahrzeug handelt es sich um Fahrerassistenzsysteme, die auf andere Verkehrsteilnehmer reagieren, zum Beispiel Fahrzeuge oder Fußgänger. Hierfür wird der relevanteste Verkehrsteilnehmer ausgewählt um eine entsprechende Aktion auszuführen. Diese sogenannte Streckenauswahl bzw. Zielauswahl geschieht durch Schätzung der Trajektorie des eigenen Kraftfahrzeuges und Auswahl desjenigen Verkehrsteilnehmers, dersich auf dieserTrajektorie befindet. Die Schätzung der Trajektorie basiert generell auf dem Wissen über eine Geschwindigkeit und eine Gierrate des eigenen Kraftfahrzeugs, als auch auf anderen zur Verfügung stehenden Informationen, zum Beispiel Fahrbahnmarkierungen. Dieses Verfahren führt manchmal zu einer schlechten Streckenauswahl bzw. Zielauswahl. Für die Verfolgung von anderen Kraftfahrzeugen, nach Auswahl dieses, wurde bisher der relative Abstand zwischen dem eigenen Kraftfahrzeug und dem anderen Kraftfahrzeug verwendet, um zu prüfen ob das andere Kraftfahrzeug ein geeignetes Kraftfahrzeug zur Verfolgung ist.

EP 1 315 980 A2 offenbart ein Erfassungssystem, das ein Geschwindigkeitsmesssystem zum Messen der Geschwindigkeit eines Fahrzeugs und ein Gierratenmesssystem zum Messen der Gierrate des Fahrzeugs umfasst. Das nächstliegende Ziel in der gleichen Fahrspur wie das Trägerfahrzeug wird als das primäre Ziel definiert. Es werden die Ziel-Querentfernungspositionen mit dem vorbestimmten Weg des Trägerfahrzeugs verglichen und die Ziele werden entweder als innerhalb oder als außerhalb der Autobahnfahrspur des Trägerfahrzeugs befindlich klassifiziert.

EP 1 997 947 A2 offenbart eine Fahrzeugsteuervorrichtung, die einen Verzögerungsaktuator und einen Beschleunigungsaktuator gemäß den Steuerungszielwerten steuert, die durch eine Steuerungszielwertbestimmungsvorrichtung bestimmt werden. Es wird ein Objekt, das dem gegenwärtigen Fahrzeug auf dem erwarteten Bewegungspfad des gegenwärtigen Fahrzeugs am nächsten liegt, als das vorausfahrende Fahrzeug festgelegt.

DE 10 2012 210 145 A1 offenbart Vorrichtung zur Unterstützung des Fahrers bei der Spurführung eines Fahrzeugs auf einer Fahrbahn.

DE 10 2010 023 196 A1 offenbart ein Verfahren und Vorrichtung zur Vordermannerkennung.

### Zugrundeliegendes Problem

Es istdie Aufgabe dervorliegenden Erfindung, einefehlerunanfälligere und robustere Lösung für die Verfolgung eines Kraftfahrzeugszu liefern.

### Vorgeschlagene Lösung

Diese Aufgabe wird durch ein Steuerungs-System gemäß Anspruch 1 und ein Steuerungs-Verfahren gemäß Anspruch 5 gelöst.

Gemäß der vorliegenden Erfindung ist ein Steuerungs-System dazu eingerichtet und bestimmt vorausfahrende Kraftfahrzeuge zu erkennen. Das Steuerungs-System ist wenigstens dazu eingerichtet und bestimmt, am Verkehr teilnehmende andere Kraftfahrzeuge vor dem eigenen Kraftfahrzeug mit dem mindestens einen Umfeldsensor zu erfassen. Das Steuerungs-System ist wenigstens dazu eingerichtet und bestimmt, eine jeweilige Position der anderen Kraftfahrzeuge mit dem mindestens einen Umfeldsensor zu bestimmen. Das Steuerungs-System ist wenigstens dazu eingerichtet und bestimmt, aus einer aktuellen Geschwindigkeit und einer aktuellen Gierrate des eigenen Kraftfahrzeugs eine Trajektorie des eigenen Kraftfahrzeugs zu bestimmen. Das Steuerungs-System ist wenigstens dazu eingerichtet und bestimmt, ein einziges Kraftfahrzeug aus den anderen Kraftfahrzeugen auszuwählen, das den kürzesten Abstand zu der Trajektorie aufweist, um diesem einzigen Kraftfahrzeug mit dem eigenen Kraftfahrzeug zu folgen.

Der Vorteil dieser Lösung liegt in der Auswertung des kürzesten Abstands zwischen dem anderen Kraftfahrzeug und der Trajektorie des eigenen Kraftfahrzeugs, die einen Hinweis darauf gibt, wie geeignet die Auswahl des einzigen Kraftfahrzeugs ist.

### Weitere Ausgestaltungen und vorteilhafte Weiterbildungen

Die Trajektorie kann durch Integration der Geschwindigkeit und der Gierrate über eine vorbestimmte Zeit bestimmt werden.

Das Steuerungs-System ist ferner dazu eingerichtet und bestimmt, einen relativen Abstand zwischen dem eigenen Kraftfahrzeug und dem einzigen Kraftfahrzeug zu erfassen. Das Steuerungs-System ist ferner dazu eingerichtet und bestimmt, den Abstand zwischen dem eigenen Kraftfahrzeug und dem einzigen Kraftfahrzeug entsprechend einer Verkehrssituation zu regeln.

Das Steuerungs-System ist ferner dazu eingerichtet und bestimmt, den jeweiligen kürzesten Abstand der anderen Kraftfahrzeuge zu der Trajektorie des eigenen Kraftfahrzeugs mit dem kürzesten Abstand des einzigen Kraftfahrzeugs zu der Trajektorie des eigenen Kraftfahrzeugs zu vergleichen. Das Steuerungs-System ist ferner dazu eingerichtet und bestimmt, wenn das Vergleichen ergibt, dass sich ein anderes Kraftfahrzeug näher an der Trajektorie befindet, dieses auszuwählen, um diesem zu folgen und das vorher ausgewählte einzige Kraftfahrzeug für eine mögliche spätere Auswahl zu speichern.

Eine mögliche spätere Auswahl ermöglicht eine mögliche falsche Auswahl später schneller zu beheben. Dieses Speichern ermöglicht es einem Nutzer oder dem System dem Kraftfahrzeug bei einer späteren Auswahl als geeignet zu markieren oder diesem zu folgen.

Das Steuerungs-System kann ferner dazu eingerichtet und bestimmt sein, eine manuelle Eingabe eines Nutzers zu verarbeiten, wobei das einzige Kraftfahrzeug durch die Auswahl eines der anderen Kraftfahrzeuge abgewählt wird, um diesem zu folgen.

Das Abwählen hilft dem Fahrer bei einer falschen Auswahl des Systems selber Abhilfe zu verschaffen oder eine andere gewünschte Fahrroute, dem andere Kraftfahrzeug folgend, auszuwählen, die ursprünglich nicht für die Fahrt vorgesehen war.

Das Steuerungs-System kann so ausgebildet sein kann, dass das Steuerungs-System entscheiden kann, ob die manuelle Eingabe des Nutzers zulässig ist.

Das Steuerungs-System kann ferner Fahrbahnbegrenzungen und/oder Fahrbahnmarkierungen erkennen. Der mindestens eine Umfeldsensor kann dazu eingerichtet sein, einer elektronischen Steuerung des Steuerungs-Systems die den Bereich vor dem Kraftfahrzeug wiedergebende Umfelddaten bereitzustellen. Das Steuerungs-System kann wenigstens dazu eingerichtet und bestimmt sein, Fahrbahnbegrenzungen und/oder Fahrbahnmarkierungen mit dem mindestens einen Umfeldsensor zu erfassen. Das Steuerungs-System kann wenigstens dazu eingerichtet und bestimmt sein, aus den erfassten Fahrbahnbegrenzungen und/oder Fahrbahnmarkierungen jeweils eine Trajektorie zu ermitteln. Das Steuerungs-System kann wenigstens dazu eingerichtet und bestimmt sein, Paare aus den ermittelten Trajektorien zu bilden, wobei ein Paar jeweils zwei Trajektorien umfassen kann. Das Steuerungs-System kann wenigstens dazu eingerichtet und bestimmt sein, für jedes Paar erster und zweiter Trajektorien in vorbestimmten Abständen Abtastpunkte zu ermitteln. Das Steuerungs-System kann wenigstens dazu eingerichtet und bestimmt sein, quer zu einer Verlaufsrichtung der ersten Trajektorie Abstände der ermittelten Abtastpunkte zu der zweiten Trajektorie zu bestimmen, und eine Länge eines Abschnittes entlang der Verlaufsrichtung der ersten Trajektorie zu berechnen, bei der die bestimmten Abstände innerhalb eines vorbestimmten Wertebereichs liegen, und/oder quer zu einer Verlaufsrichtung der zweiten Trajektorie Abstände der ermittelten Abtastpunkte zu der ersten Trajektorie zu bestimmen, und eine Länge eines Abschnitts entlang der Verlaufsrichtung der zweiten Trajektorie zu berechnen, bei der die bestimmten Abstände innerhalb des vorbestimmten Wertebereichs liegen. Das Steuerungs-System kann wenigstens dazu eingerichtet und bestimmt sein, eine Menge von Paaren von Trajektorien basierend auf einem Kriterium für die Paarbildung auszuwählen, um basierend auf dieser Menge mindestens eine Fahrbahn und/oder mindestens eine Trajektorie für das Kraftfahrzeug zu bestimmen.

Der Vorteil dieser vorgeschlagenen Lösung liegt in der Fähigkeit, längere Aufnahmen von Fahrbahnbegrenzungen und/oder Fahrbahnmarkierungen zu machen anstatt lediglich eine aktuelle Position eines Verkehrsteilnehmers oder von Pfadhinweisen aufzunehmen. Die Trajektorien als eindimensionale Linienstrukturen haben eine intuitive Bedeutung und deren Ähnlichkeit bzw. Parallelität kann auf mathematischem Wege berechnet werden. Aus den einzelnen Trajektorien kann zusätzlich eine Basis geschaffen werden um situationsbedingte Modelle berechnen zu können, auf die später in ähnlichen Fahrsituationen in Folge von Trainingsdaten zurückgegriffen werden kann.

Der vorbestimmte Wertebereich kann so gewählt werden, dass die Abstände zwischen den zwei Trajektorien eines Paares im Wesentlichen parallel verlaufen. Es ist auch denkbar, dass ein größerer Wertebereich festgelegt wird.

Das Kriterium für die Paarbildung kann eine Länge, ein Abstand, eine Krümmung und/oder ein Verlauf der Trajektorien sein.

Die Abschnitte der ersten und zweiten Trajektorie können durch ein Sichtfeld des mindestens einen Umfeldsensors vorgegeben sein.

Das Kriterium für die Paarbildung können die zwei berechneten Längen der Abschnitte der ersten und der zweiten Trajektorie jedes Paares sein.

Das Kriterium für die Paarbildung kann ein Maximum sein, das aus den zwei berechneten Längen der Abschnitte der ersten und der zweiten Trajektorie jedes Paares ermittelt wird.

Kriterien für die Paarbildung können ein Mittelwert und/oder eine Standardabweichung sein, der/die aus den zwei Längen der Abschnitte der ersten und der zweiten Trajektorie jedes Paares ermittelt wird.

Der Mittelwert und/oder eine Standardabweichung jedes Paares kann herangezogen werden, um basierend auf dem größten Mittelwert bzw. der kleinsten Standardabweichung das dazugehörige Paar auszuwählen.

### Für die Paarbildung können ausschließlich Trajektorien verwendet werden, die eine vorbestimmte Mindestlänge aufweisen

Das Steuerungs-System kann wenigstens dazu eingerichtet und bestimmt sein, ein am Verkehr teilnehmendes anderes Kraftfahrzeug mit dem mindestens einen Umfeldsensor zu erfassen. Das Steuerungs-System kann wenigstens dazu eingerichtet und bestimmt sein, Positionen des anderen Kraftfahrzeugs für ein vorbestimmtes Zeitintervall zu ermitteln. Das Steuerungs-System kann wenigstens dazu eingerichtet und bestimmt sein, am Ende des Zeitintervalls zu bestimmen, ob
a) eine aktuelle Position des eigenen Kraftfahrzeugs vor wenigstens einer der ermittelten Positionen des anderen Kraftfahrzeugs liegt;
b) ein lateraler Abstand zwischen einer jeweils nächsten Position der ermittelten Positionen des anderen Kraftfahrzeugs vor und hinter der aktuellen Position des eigenen Kraftfahrzeugs einen vorbestimmten Wert nicht überschreitet; und
c) eine Anzahl der ermittelten Positionen des anderen Kraftfahrzeugs, die sich vor der aktuellen Position des eigenen Kraftfahrzeugs befinden, eine vorbestimmte Mindestanzahl überschreitet.

Das Steuerungs-System kann wenigstens dazu eingerichtet und bestimmt sein, aus den ermittelten Positionen des anderen Kraftfahrzeugs eine Trajektorie zu estimieren, wenn bestimmt wurde, dass a), b) und c) erfüllt sind. Das Steuerungs-System kann wenigstens dazu eingerichtet und bestimmt sein, das andere Kraftfahrzeug auszuwählen, um diesem zu folgen, basierend auf einem Abweichungsmaß zwischen der estimierten Trajektorie des anderen Kraftfahrzeugs und einer Trajektorie des eigenen Kraftfahrzeugs.

"Estimieren" ist hier eine Bestimmung oder eine Näherung der zu estimierenden Trajektorie des anderen Kraftfahrzeugs durch eine Interpolation der ermittelten Positionen des anderen Kraftfahrzeugs oder durch eine Extrapolation, um über die ermittelten Positionen des anderen Kraftfahrzeugs hinausgehende Positionen des anderen Kraftfahrzeugs zu erhalten.

Die hier vorgestellte Lösung bietet den Vorteil, dass die estimierte Trajektorie des anderen Kraftfahrzeugs auf erfassten Daten beruht. Dadurch sind die Umfelddaten durch weniger Rauschen belastet. Ferner kann für das vorbestimmte Zeitintervall ein sogenannter "Headway", d.h. in Vorausschau eine Zeit, zum Beispiel in einer Größenordnung von 7 Sekunden, gewählt werden, wodurch sichergestellt wird, dass sich die estimierte Trajektorie des anderen Kraftfahrzeugs und die Trajektorie des eigenen Kraftfahrzeugs treffen können. Trajektorien von anderen Kraftfahrzeugen können ferner für die Verwendung einer Verkehrssituation dienen.

Die aktuelle Position kann eine Position sein zu einem Zeitpunkt nach oder am Ende des vorbestimmten Zeitintervalls.

Der laterale Abstand kann als Abstand senkrecht zu einer Verlaufsrichtung einer Fahrbahn verstanden werden. Ein lateraler Abstand zwischen zwei Punkten kann somit ein Abstand zwischen den beiden Punkten senkrecht zu einer Fahrbahnverlaufsrichtung sein, bzw. zu der Fahrrichtung des eigenen Kraftfahrzeugs.

Das Abweichungsmaß zwischen der estimierten Trajektorie und der Trajektorie des eigenen Kraftfahrzeugs kann einen vorbestimmten Schwellenwert unterschreiten.

Der vorbestimmte Schwellenwert kann durch einen Abstand, einer Krümmung und/oder einen Verlauf vorbestimmt sein. Der vorbestimmte Schwellenwert kann durch einen maximalen Wert für den Abstand, dem Krümmungsunterschied oder den Verlaufsunterschied festgelegt sein. Das Abweichungsmaß kann bestimmt werden durch einen lateralen Abstand zwischen den Trajektorien, ausgehend von einer der beiden Trajektorien.

Das Abweichungsmaß für eine Mindestlänge der Trajektorie des eigenen Kraftfahrzeugs kann unterschritten werden.

Die Mindestlänge kann eine Länge angeben, für die das Abweichungsmaß den vorbestimmten Schwellenwert unterschreitet. Die Mindestlänge kann eine Länge oder Entfernung zwischen zwei Punkten sein, innerhalb der oder zwischen denen das Abweichungsmaß der estimierten Trajektorie zu der eigenen Trajektorie den vorbestimmten Schwellenwert unterschreitet.

Die Mindestlänge kann über einem vorbestimmten Schwellenwert liegen basierend auf einem aktuellen Abstand zwischen dem eigenen und dem anderen Kraftfahrzeug. Der aktuelle Abstand zwischen dem eigenen und dem anderen Kraftfahrzeug kann kleiner als die Mindestlänge sein.

Das Steuerungs-System kann ferner dazu eingerichtet und bestimmt sein, das teilnehmende andere Kraftfahrzeug auszuwählen, um diesem zu folgen, wenn
a) ein aktueller Abstand zwischen dem eigenen und dem anderen Kraftfahrzeug einen vorbestimmten Schwellenwert unterschreitet;
b) der Fehler der estimierten Trajektorie einen vorbestimmten Schwellenwert unterschreitet;
c) die Krümmung der estimierten Trajektorie einen vorbestimmten Schwellenwert unterschreitet; und/oder
d) die relative Geschwindigkeit zwischen dem anderen Kraftfahrzeug und dem eigenen Kraftfahrzeug einen vorbestimmten Schwellenwert unterschreitet.

Ein weiterer Aspekt betrifft ein Steuerungs-Verfahren, das in einem Kraftfahrzeug basierend auf aus mindestens einem dem Kraftfahrzeug zugeordneten Umfeldsensor gewonnenen Umfelddaten vorausfahrende Fahrzeuge erkennt. Das Verfahren weist die folgenden Schritte auf:
- einer elektronischen Steuerung in dem eigenen Kraftfahrzeug mittels der Umfeldsensoren den Bereich vor dem Kraftfahrzeug wiedergebende Umfelddaten bereitzustellen,
- am Verkehr teilnehmende andere Kraftfahrzeuge vor dem eigenen Kraftfahrzeug mit dem mindestens einen Umfeldsensor zu erfassen,
- eine jeweilige Position der anderen Kraftfahrzeuge mit dem mindestens einen Umfeldsensor zu bestimmen,
- aus einer aktuellen Geschwindigkeit und einer aktuellen Gierrate des eigenen Kraftfahrzeugs eine Trajektorie des eigenen Kraftfahrzeugs zu bestimmen,
- ein einziges Kraftfahrzeug aus den anderen Kraftfahrzeugen auszuwählen, das den kürzesten Abstand zu der Trajektorie aufweist, um diesem einzigen Kraftfahrzeug mit dem eigenen Kraftfahrzeug zu folgen.

Auch wenn einige der voranstehend beschriebenen Aspekte in Bezug auf das Steuerungs-System beschrieben wurden, so können diese Aspekte auch auf das Steuerungs-Verfahren zutreffen. Genauso können die voranstehend in Bezug auf das Steuerungs-Verfahren beschriebenen Aspekte in entsprechender Weise auf das Steuerungs-System zutreffen.

### Kurbeschreibung der Zeichnungen

Die vorliegende Erfindung soll weiter anhand von Figuren erläutert werden. Diese Figuren zeigen schematisch:
- Figur 1: eine schematische Darstellung eines Flussdiagramms gemäß einem Ausführungsbeispiel der vorliegenden Erfindung;
- Figur 2: eine schematische Darstellung von Fahrbahnen mit dazugehörigen Fahrbahnbegrenzungen und Fahrbahnmarkierungen;
- Figur 3: eine schematische Darstellung einer Fahrsituation zur Auswahl von einer Fahrbahn mit entsprechenden Fahrbahnbegrenzungen und Fahrbahnmarkierungen;
- Figur 4: eine schematische Darstellung eines Flussdiagramms gemäß einem Ausführungsbeispiel der vorliegenden Erfindung;
- Figur 5: eine schematische Darstellung einer Fahrsituation mit einem eigenen Kraftfahrzeug und einem anderen Kraftfahrzeug mit Stützstellen und einer estimierten Trajektorie des anderen Kraftfahrzeugs;
- Figur 6: eine schematische Darstellung einer Abweichung zwischen der einer Trajektorie des eigenen Kraftfahrzeugs und der Trajektorie des anderen Kraftfahrzeugs;
- Figur 7: eine schematische Darstellung eines aktuellen Abstands zwischen einer Position des eigenen Kraftfahrzeugs zu der Position des anderen Kraftfahrzeugs;
- Figur 8: eine schematische Darstellung eines Fehlers der estimierten Trajektorie des anderen Kraftfahrzeuges;
- Figur 9: eine schematische Darstellung einer Krümmung der estimierten Trajektorie des anderen Kraftfahrzeuges anhand eines Krümmungskreises;
- Figur 10: eine schematische Darstellung einer relativen Geschwindigkeit zwischen dem eigenen und dem anderen Kraftfahrzeug; und
- Figur 11: eine schematische Darstellung eines Flussdiagramms gemäß einem Ausführungsbeispiel der vorliegenden Erfindung.

Die hier beschriebenen Verfahrensvarianten der sowie deren Funktions- und Betriebsaspekte dienen lediglich dem besseren Verständnis ihrer Struktur, Funktionsweise und Eigenschaften; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen den beschriebenen Vorrichtungen zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst und können zu Gegenstad weiterer Ansprüche gemacht werden. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

### Detaillierte Beschreibung der Zeichnungen

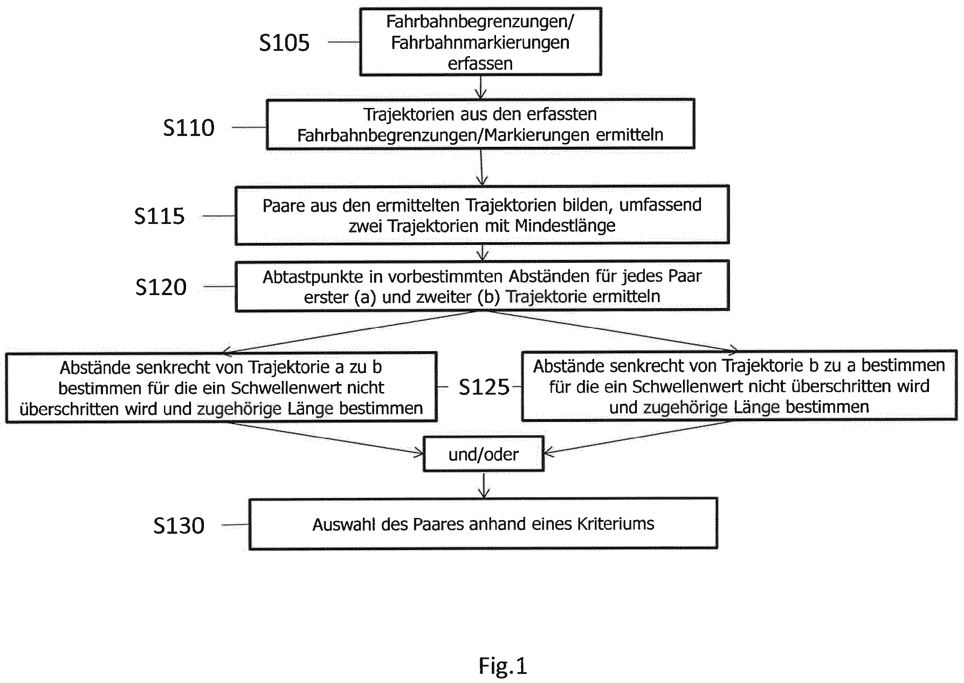

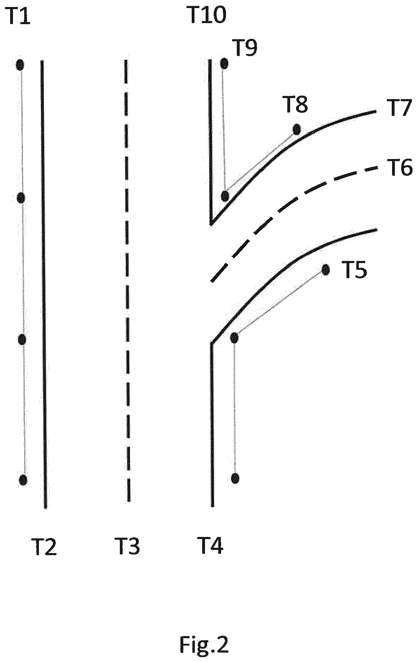

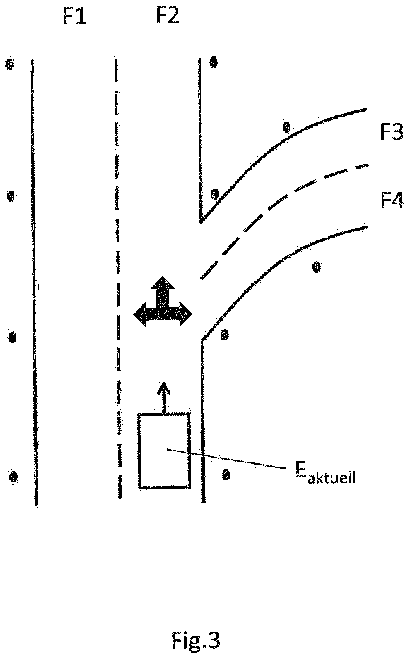

Figur 1 zeigt eine schematische Darstellung eines Flussdiagramms gemäß einem Ausführungsbeispiel der vorliegenden Erfindung. Zuerst werden durch das System über die Umfeldsensoren Umfelddaten erfasst S105. Die Umfelddaten umfassen Fahrbahnbegrenzungen und Fahrbahnmarkierungen. Die Fahrbahnbegrenzungen und Fahrbahnmarkierungen werden dann herangezogen, um daraus Trajektorien zu ermitteln S110. Die Fahrbahnbegrenzungen und Fahrbahnmarkierungen liefern Informationen wie Linienstrukturen und Pfadinformationen mit sich, welche für die Trajektorienbildung verwendet werden. Hierzu dienen nicht nur weiße Straßenmarkierungen, sondern auch Abstandpfosten an Straßenrändern. Aus den Trajektorien werden nun Paare gebildet S115. Hierbei müssen die Trajektorien eine Mindestlänge aufweisen. Weist eine Trajektorie diese Mindestlänge nicht auf, zum Beispiel wenn es nur wenige Abstandpfosten oder zu kurze Linienmarkierungen gibt, wird diese Trajektorie für die Paarbildung nicht berücksichtigt. Für jedes Paar erster und zweiter Trajektorien werden Abtastpunkte in vorbestimmten Abständen ermittelt S120. Da das zugrundeliegende Abstandstestverfahren nicht symmetrisch ist, kann im Folgenden eines der beiden Verfahren verwendet werden oder beide um die Ergebnisse zu verbessern. Es können jeweils Abstände von der ersten zu der zweiten Trajektorie jedes Paares und/oder jeweils Abstände von der zweiten zu der ersten Trajektorie jedes Paares bestimmt werden S125. Es kann jeweils eine zugehörige Länge eines Abschnitts entlang der ersten und/oder der zweiten Trajektorie berechnet werden bei der die Abstände innerhalb eines vorbestimmten Wertebereichs liegen. Nach dem Schritt des Bestimmens wird ein Paar basierend auf einem Kriterium ausgewählt, um basierend auf diesem Paar eine Fahrbahn für das Kraftfahrzeug auszuwählen. Das Kriterium können die zwei berechneten Längen sein. Das Kriterium kann auch ein Maximum sein. Das Maximum wird in diesem Fall so ermittelt, dass die berechneten Längen der Abschnitte der ersten und zweiten Trajektorie jedes Paares die größte Länge aufweisen. Das Kriterium kann auch ein Mittelwert sein. Der Mittelwert wird dann durch zwei Längen der Abschnitte der ersten und der zweiten Trajektorie jedes Paares ermittelt. Der Mittelwert jedes Paares kann dann untereinander verglichen werden, um dann das Paar mit dem größten Mittelwert auszuwählen. Um das Verfahren zu verbildlichen wird in den Figuren 2 und 3 ein Szenario schematisch dargestellt.

Figur 2 zeigt eine schematische Darstellung von Fahrbahnen mit dazugehörigen Fahrbahnbegrenzungen und Fahrbahnmarkierungen. In Figur 2 sind Fahrbahnbegrenzungen und durchgezogenen und gestrichelten Linien gemäß einer wohlbekannten Straßensituation dargestellt. Die Fahrbahnmarkierungen und die Fahrbahnbegrenzungen liefern Informationen über mögliche Trajektorien T1 bis T10. Diese Trajektorien sind schematisch als durchgezogene oder gestrichelte Linien angedeutet. Hierbei können alle Trajektorien miteinander kombiniert werden, wobei diese Kombination eine Fahrbahn vorgeben kann. Aus dieser Kombination, hier Paar genannt, kann dann diese Fahrbahn ermittelt werden. Zum Beispiel bilden die Paare T1 und T3 die linke Fahrspur der Straßensituation ab. Für die rechte Fahrbahn ergeben sich mehrere Möglichkeiten, zum Beispiel T2 mit T4 und T10, sowie T3 mit T4 und T10. Für die Abbiegekurve würden T5 mit T8 oder T4 mit T7 in Betracht kommen. Eine Auswahlsituation, bei der eine geeignete Fahrbahn gewählt werden soll, wird in Figur 3 schematisch dargestellt.

Figur 3 zeigt eine schematische Darstellung einer Fahrsituation zur Auswahl von einer Fahrbahn mit entsprechenden Fahrbahnbegrenzungen und Fahrbahnmarkierungen. Die Fahrbahnen F1 bis F4 stehen für das in schwarz umrandet dargestellte Kraftfahrzeug E_akt zur Verfügung. Die Umfeldsensoren erfassen den Bereich in Fahrtrichtung vorwärts in einem Bereich vor dem Kraftfahrzeug. Diese Sichtrichtung der Umfeldsensoren liefert gemäß dem Ausführungsbeispiel in Figur 1 die Fahrbahnen F1 bis F4. Zur Auswahl einer geeigneten Fahrbahn wird zurückgegriffen auf situationsbedingte Umstände, welche Anzeigen ob zum Beispiel rechts abgebogen werden soll. Wenn diese Auswahl wenig sinnvoll erscheint, werden F3 und F4 nicht in der Ermittlung einer geeigneten Fahrbahn berücksichtigt. Die Fahrbahnen F1 und F2 bilden dementsprechend konsistente Fahrbahnen und werden für die Auswahl berücksichtigt.

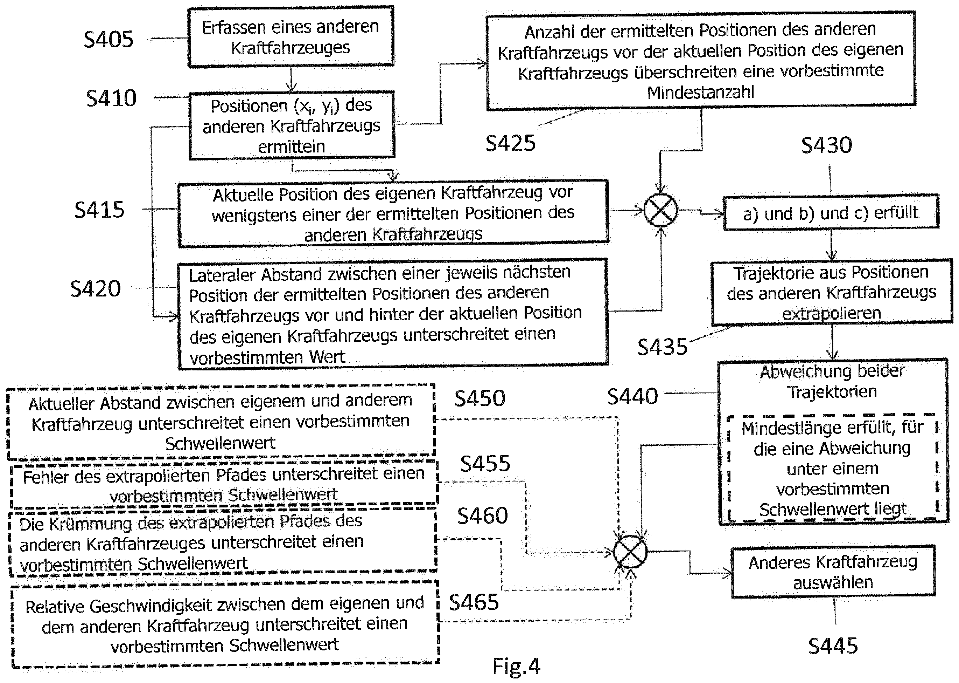

Figur 4 zeigt eine schematische Darstellung eines Flussdiagramms gemäß einem Ausführungsbeispiel der vorliegenden Erfindung. Ein am Verkehr teilnehmendes anderes Kraftfahrzeug wird mit den Umfeldsensoren erfasst S405. Daraufhin werden Positionen des anderen Kraftfahrzeugs für ein vorbestimmtes Zeitintervall ermittelt S410. Am Ende des Zeitintervalls wird bestimmt, ob eine aktuelle Position des eigenen Kraftfahrzeugs vor wenigstens einer der ermittelten Positionen des anderen Kraftfahrzeugs liegt S415. Ferner wird bestimmt, ob ein lateraler Abstand zwischen einer jeweils nächsten Position der ermittelten Positionen des anderen Kraftfahrzeugs vor und hinter der aktuellen Position des eigenen Kraftfahrzeugs einen vorbestimmten Wert nicht überschreitet S420. Ferner wird bestimmt, ob eine Anzahl der ermittelten Positionen des anderen Kraftfahrzeugs, die sich vor der aktuellen Position des eigenen Kraftfahrzeugs befinden, eine vorbestimmte Mindestanzahl überschreitet S425. Wenn diese Bedingungen erfüllt sind S430, wird aus den ermittelten Positionen des anderen Kraftfahrzeugs eine Trajektorie estimiert S435. Daraufhin wird das andere Kraftfahrzeug ausgewählt und diesem gefolgt S445. Die Auswahl basiert auf einer Abweichung S440 zwischen der estimierten Trajektorie und einer Trajektorie des eigenen Kraftfahrzeugs. Die aktuelle Position kann eine Position sein zu einem Zeitpunkt nach oder am Ende des vorbestimmten Zeitintervalls. Der laterale Abstand kann als Abstand senkrecht zu einer Verlaufsrichtung einer Fahrbahn verstanden werden. Ein lateraler Abstand zwischen zwei Punkten kann somit ein Abstand zwischen den beiden Punkten senkrecht zu einer Fahrbahnverlaufsrichtung sein, bzw. zu der Fahrrichtung des eigenen Kraftfahrzeugs. Die Abweichung zwischen der estimierten Trajektorie und der Trajektorie des eigenen Kraftfahrzeugs kann einen vorbestimmten Schwellenwert unterschreiten. Der vorbestimmte Schwellenwert kann durch einen Abstand, einer Krümmung und/oder einen Verlauf vorbestimmt sein. Der vorbestimmte Schwellenwert kann durch einen maximalen Wert für den Abstand, dem Krümmungsunterschied oder den Verlaufsunterschied festgelegt sein. Die Abweichung kann bestimmt werden durch einen lateralen Abstand zwischen den Trajektorien, ausgehend von einer der beiden Trajektorien. Die Abweichung für eine Mindestlänge der Trajektorie des eigenen Kraftfahrzeugs kann unterschritten werden.

Die Mindestlänge kann eine Länge angeben, für die die Abweichung den vorbestimmten Schwellenwert unterschreitet. Die Mindestlänge kann eine Länge oder Entfernung zwischen zwei Punkten sein, innerhalb der oder zwischen denen die Abweichung der estimierten Trajektorie zu der eigenen Trajektorie den vorbestimmten Schwellenwert unterschreitet. Die Mindestlänge kann über einem vorbestimmten Schwellenwert liegen basierend auf einem aktuellen Abstand zwischen dem eigenen und dem anderen Kraftfahrzeug. Der aktuelle Abstand zwischen dem eigenen und dem anderen Kraftfahrzeug kann kleiner als die Mindestlänge sein. Optional S450 kann die Auswahl basieren auf einem aktuellen Abstand zwischen dem eigenen und dem anderen Kraftfahrzeug, der einen vorbestimmten Schwellenwert unterschreiten soll. Optional S455 kann die Auswahl basieren auf einem Fehler der estimierten Trajektorie, der einen vorbestimmten Schwellenwert unterschreiten soll. Optional S460 kann die Auswahl basieren auf einer Krümmung der estimierten Trajektorie, die einen vorbestimmten Schwellenwert unterschreiten soll. Optional S465 kann die Auswahl auch auf einer relativen Geschwindigkeit zwischen dem anderen Kraftfahrzeug und dem eigenen Kraftfahrzeug basieren, die einen vorbestimmten Schwellenwert unterschreiten soll.

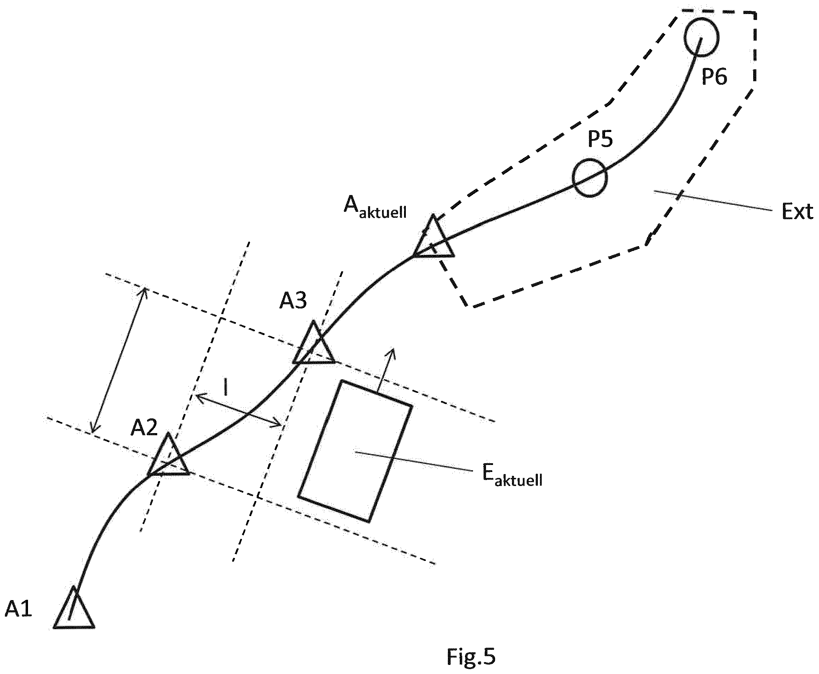

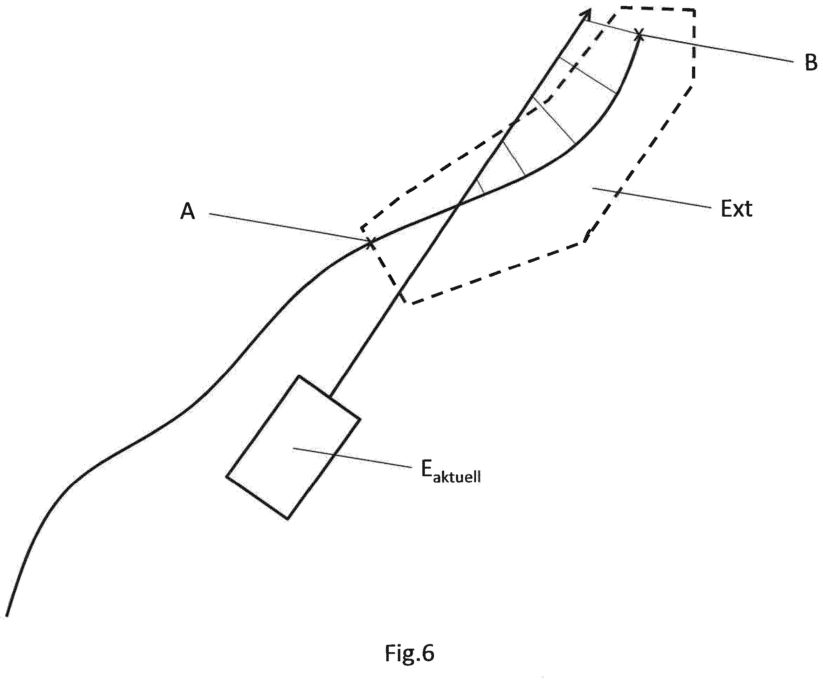

Figur 5 zeigt eine schematische Darstellung einer Fahrsituation mit einem eigenen Kraftfahrzeug und einem anderen Kraftfahrzeug mit Stützstellen und einer estimierten Trajektorie des anderen Kraftfahrzeugs. Die Dreiecke A1, A2, A3 und Aₐₖₜᵤₑₗₗ stellen Positionen eines anderen Kraftfahrzeugs dar. Eₐₖₜᵤₑₗₗ und Aₐₖₜᵤₑₗₗ stellen aktuelle Positionen eines eigenen und des anderen Kraftfahrzeugs dar. Ext stellt ein Estimationsgebiet dar, in dem die Punkte P5 und P6 liegen, welche Punkte auf der Estimationskurve darstellen, die sogenannte estimierte Trajektorie. d und l stellen in diesem Zusammenhang einen Abstand zwischen zwei berechneten Positionen A2 und A3 des anderen Kraftfahrzeugs dar aus der Sicht eines Koordinatensystems des eigenen Kraftfahrzeugs. l stellt den lateralen Abstand zwischen A2 und A3 dar, der einen vorbestimmten Wert nicht überschreiten sollte. d stellt den longitudinalen Abstand zwischen A2 und A3 dar. Die Darstellung zeigt hier schematisch, dass eine aktuelle Position des eigenen Kraftfahrzeugs zwischen zwei bestimmten Positionen des anderen Kraftfahrzeugs liegen kann, die zu einem früheren Zeitpunkt bestimmt wurden. Ausgehend aus den Punkten A1 bis Aₐₖₜᵤₑₗₗ wird die estimierte Trajektorie mit den Punkten P5 und P6 berechnet. Welche Bedingung vorzugsweise erfüllt sein soll, damit das andere Kraftfahrzeug von dem eigenen Kraftfahrzeug ausgewählt wird, ist in Figur 6 gezeigt.

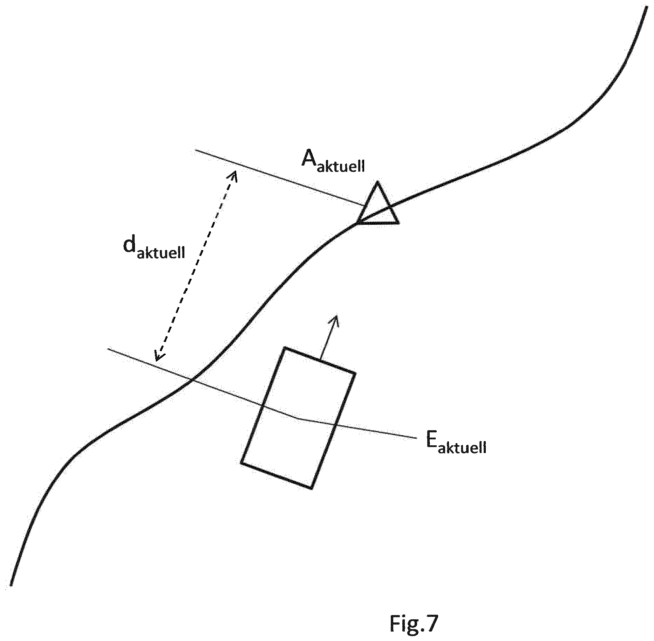

Figur 6 zeigt eine schematische Darstellung einer Abweichung zwischen der einer Trajektorie des eigenen Kraftfahrzeugs und der Trajektorie des anderen Kraftfahrzeugs. Der Punkt A und der Punkt B der estimierten Trajektorie des anderen Kraftfahrzeugs stellt eine Strecke dar, für die eine Abweichung zwischen der estimierten Trajektorie und der Trajektorie des eigenen Kraftfahrzeugs innerhalb eines vorbestimmten Schwellenwerts liegt. Hierbei könnte die Abweichung auf einer Krümmung der estimierten Kurve beruhen, angedeutet durch die größere Krümmung der estimierten Trajektorie im Gegensatz zu der estimierten Trajektorie des eigenen Kraftfahrzeugs. Hier wird der Abstand zwischen der estimierten Trajektorie und der Trajektorie des eigenen Kraftfahrzeugs durch Striche angedeutet. Dieser Abstand kann als Kriterium für die Auswahl der estimierten Trajektorie herangezogen werden. Die Länge, bis zu der die Abweichung innerhalb des vorbestimmten Schwellenwerts liegt, wird ermittelt und mit anderen Trajektorien verglichen und/oder wenn die Länge eine Mindestlänge ist, das dazugehörige andere Kraftfahrzeug ausgewählt. Ein weiteres Kriterium für die Auswahl eines anderen Kraftfahrzeugs ist in Figur 7 schematisch dargestellt.

Figur 7 zeigt eine schematische Darstellung eines aktuellen Abstands dₐₖₜᵤₑₗₗ zwischen einer Position des eigenen Kraftfahrzeugs Eₐₖₜᵤₑₗₗ zu der Position des anderen Kraftfahrzeugs Aₐₖₜᵤₑₗₗ. Es ist leicht vorzustellen, dass bei einem zu großen Abstand zwischen Eₐₖₜᵤₑₗₗ und Aₐₖₜᵤₑₗₗ das dazugehörige andere Kraftfahrzeug nicht zur Auswahl und Verfolgung geeignet ist. Erfüllt also der aktuelle Abstand dₐₖₜᵤₑₗₗ die optionale Bedingung unterhalb eines Schwellenwerts zu liegen nicht, wird das andere Kraftfahrzeug nicht für die Auswahl vorgesehen.

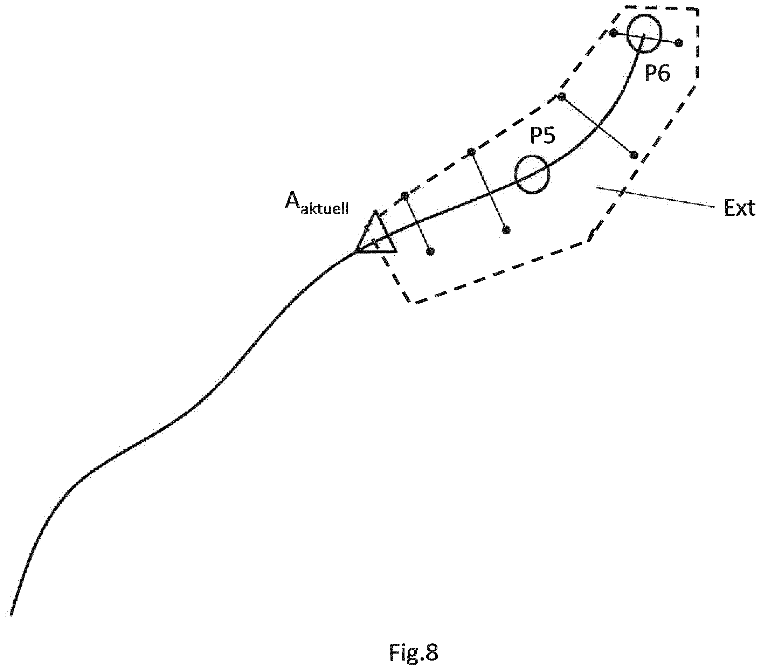

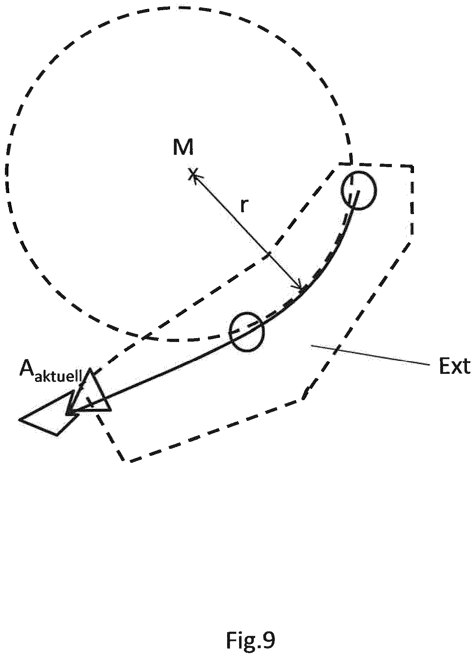

Figur 8 zeigt eine schematische Darstellung eines Fehlers der estimierten Trajektorie des anderen Kraftfahrzeuges. Die schwarzen Querstriche im Estimationsgebiet Ext stellen einen Fehler der estimierten Kurve dar. Liegt dieser Fehler innerhalb eines vorbestimmten Wertebereichs, kann die estimierte Kurve für eine Auswahl des anderen Kraftfahrzeugs berücksichtigt werden. Eine weiter optionale Bedingung für die Auswahl des anderen Kraftfahrzeugs ist in Figur 9 schematisch dargestellt.

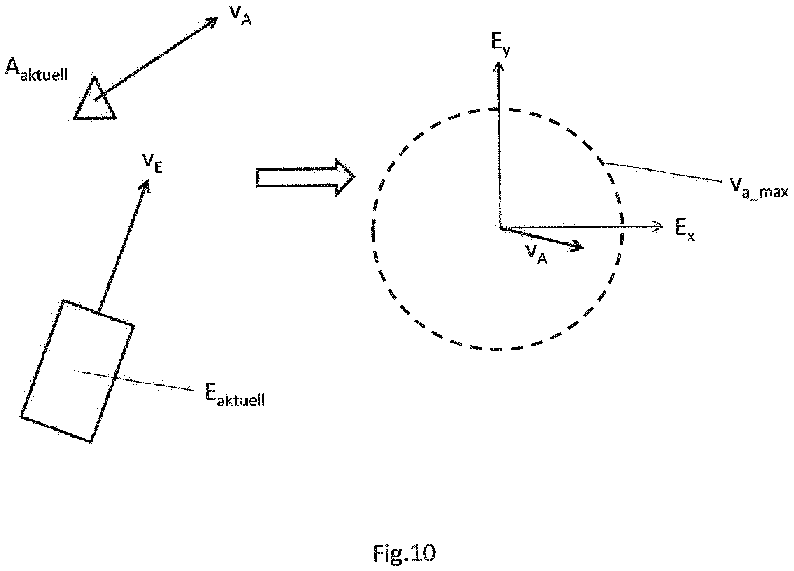

Figur 9 zeigt eine schematische Darstellung einer Krümmung der estimierten Trajektorie des anderen Kraftfahrzeuges anhand eines Krümmungskreises. Der Krümmungskreis ist hier schematisch definiert durch den Punkt M und den Radius r. Der Krümmungskreis M ist an der Stelle der größten Krümmung der estimierten Trajektorie des anderen Kraftfahrzeugs angelegt. Unterschreitet der Radius r einen vorbestimmten Wert, ist die estimierte Trajektorie ungeeignet und entsprechend die Auswahl des anderen Kraftfahrzeugs. Der kleine Krümmungsradius ist gleichbedeutend mit einer großen Krümmung der estimierten Kurve. Eine weitere optionale Bedingung für die Auswahl des anderen Kraftfahrzeugs ist in Figur 10 gegeben.

Figur 10 zeigt eine schematische Darstellung einer relativen Geschwindigkeit zwischen dem eigenen und dem anderen Kraftfahrzeug. Es ist eine aktuelle Position des eigenen Kraftfahrzeugs Eₐₖₜᵤₑₗₗ und dessen aktuelle Geschwindigkeit v_{E} schematisch dargestellt. Es ist weiter eine aktuelle Position des anderen Kraftfahrzeugs Aₐₖₜᵤₑₗₗ und dessen aktuelle Geschwindigkeit v_{A} schematisch dargestellt. Auf der rechten Seite der Figur 10 ist ein Koordinatensystem aus Sicht des eigenen Kraftfahrzeugs dargestellt. Hierin bilden E_{y} die Fahrtrichtung und Eₓ die laterale Richtung ausgehend von einem Referenzpunkt des eigenen Kraftfahrzeugs. Der Kreis v_{a_max} verdeutlicht einen maximalen Wert für die relative Geschwindigkeit des anderen Kraftfahrzeugs zu dem eigenen Kraftfahrzeug. Ist vₐ außerhalb des Kreises v_{a_max}, ist das dazugehörige andere Kraftfahrzeug für die Auswahl nicht geeignet.

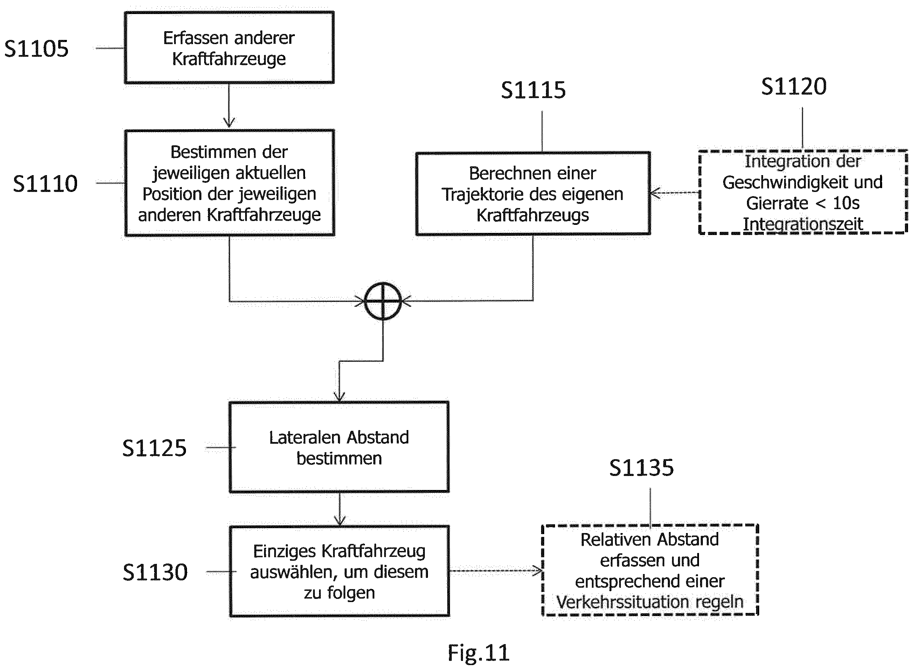

Figur 11 zeigt eine schematische Darstellung eines Flussdiagramms gemäß einem Ausführungsbeispiel der vorliegenden Erfindung. Am Verkehr teilnehmende andere Kraftfahrzeuge vor dem eigenen Kraftfahrzeug werden mit mindestens einem Umfeldsensor erfasst S1105. Eine jeweilige Position der anderen Kraftfahrzeuge wird mit dem mindestens einen Umfeldsensor bestimmt S1110. Aus einer aktuellen Geschwindigkeit und einer aktuellen Gierrate des eigenen Kraftfahrzeugs wird eine Trajektorie des eigenen Kraftfahrzeugs bestimmt S1115. Die Trajektorie kann durch Integration der Geschwindigkeit und der Gierrate über eine vorbestimmte Zeit bestimmt werden, zum Beispiel eine Zeit bis zu 10 Sekunden. Dann wird ein einziges Kraftfahrzeug aus den anderen Kraftfahrzeugen ausgewählt S1130. Die Auswahl basiert auf einem kürzesten Abstand zu der Trajektorie S1125. Dem anderen Kraftfahrzeug wird mit dem eigenen Kraftfahrzeug gefolgt. Optional S1135 kann ein relativer Abstand zwischen dem eigenen Kraftfahrzeug und dem einzigen Kraftfahrzeug erfasst werden. Dieser Abstand kann dann zwischen dem eigenen Kraftfahrzeug und dem einzigen Kraftfahrzeug entsprechend einer Verkehrssituation geregelt werden.

Gemäß der Erfindung wird ein jeweiliger kürzester Abstand der anderen Kraftfahrzeuge zu der Trajektorie mit dem kürzesten Abstand des einzigen Kraftfahrzeugs verglichen.

Wenn das Vergleichen dann ergeben hat, dass sich ein anderes Kraftfahrzeug näher an der Trajektorie befindet, wird dieses ausgewählt, um diesem zu folgen. Das einzige Kraftfahrzeug wird dann für eine mögliche spätere Auswahl gespeichert. Eine mögliche spätere Auswahl ermöglicht es eine mögliche falsche Auswahl später wieder zu beheben. Dieses Speichern ermöglicht es einem Nutzer oder dem System das einzige Kraftfahrzeug bei einer späteren Auswahl als geeignet zu markieren oder diesem zu folgen.

Zusätzlich kann eine manuelle Eingabe eines Nutzers verarbeitet werden, wobei das einzige Kraftfahrzeug durch die manuelle Auswahl eines der anderen Kraftfahrzeuge abgewählt wird, um diesem zu folgen. Das Abwählen hilft dem Fahrer bei einer falschen Auswahl des Systems selber Abhilfe zu verschaffen oder eine andere gewünschte Fahrroute, dem andere Kraftfahrzeug folgend, auszuwählen, die ursprünglich nicht für die Fahrt vorgesehen war. Auch kann das System darüber entscheiden, ob eine solche manuelle Eingabe des Nutzers zulässig ist.

## Patentansprüche

1. Steuerungs-System, das zum Einsatz in einem Kraftfahrzeug eingerichtet und bestimmt ist, basierend auf aus mindestens einem dem Kraftfahrzeug zugeordneten Umfeldsensor gewonnenen Umfelddaten vorausfahrende Kraftfahrzeuge zu erkennen, wobei der mindestens eine Umfeldsensor dazu eingerichtet ist, einer elektronischen Steuerung des Steuerungs-Systems die den Bereich vor dem Kraftfahrzeug wiedergebenden Umfelddaten bereitzustellen, und wobei das Steuerungs-System wenigstens dazu eingerichtet und bestimmt ist,
am Verkehr teilnehmende andere Kraftfahrzeuge vor dem eigenen Kraftfahrzeug mit dem mindestens einen Umfeldsensor zu erfassen (S1105),
eine jeweilige Position der anderen Kraftfahrzeuge mit dem mindestens einen Umfeldsensor zu bestimmen (S1110),
aus einer aktuellen Geschwindigkeit und einer aktuellen Gierrate des eigenen Kraftfahrzeugs eine Trajektorie des eigenen Kraftfahrzeugs zu bestimmen (S1115),
ein einziges Kraftfahrzeug aus den anderen Kraftfahrzeugen auszuwählen (S1130), das den kürzesten Abstand zu der Trajektorie aufweist (S1125), um diesem einzigen Kraftfahrzeug mit dem eigenen Kraftfahrzeug zu folgen,
einen relativen Abstand zwischen dem eigenen Kraftfahrzeug und dem einzigen Kraftfahrzeug zu erfassen (S1135),
den Abstand zwischen dem eigenen Kraftfahrzeug und dem einzigen Kraftfahrzeug entsprechend einer Verkehrssituation zu regeln (S1135),
**dadurch gekennzeichnet, dass** das Steuerungs-System dazu eingerichtet und bestimmt ist,
den jeweiligen kürzesten Abstand der anderen Kraftfahrzeuge zu der Trajektorie des eigenen Kraftfahrzeugs mit dem kürzesten Abstand des einzigen Kraftfahrzeugszu der Trajektorie des eigenen Kraftfahrzeugs zu vergleichen, und
wenn das Vergleichen ergibt, dass sich ein anderes Kraftfahrzeug näher an der Trajektorie des eigenen Kraftfahrzeugs befindet, dieses auszuwählen um diesem zu folgen und das vorher ausgewählte einzige Kraftfahrzeug für eine mögliche spätere Auswahl zu speichern.

2. Steuerungs-System nach Anspruch 1, wobei die Trajektorie durch Integration (S1120) der Geschwindigkeit und der Gierrate über eine vorbestimmte Zeit bestimmt wird.

3. Steuerungs-System nach Anspruch 1 oder 2, das ferner dazu eingerichtet und bestimmt ist,
eine manuelle Eingabe eines Nutzers zu verarbeiten, wobei das einzige Kraftfahrzeug durch die Auswahl eines der anderen Kraftfahrzeuge abgewählt wird, um diesem zu folgen.

4. Steuerungs-System nach Anspruch 3, wobei das Steuerungs-System so ausgebildet sein kann, dass das Steuerungs-System entscheiden kann, ob die manuelle Eingabe des Nutzers zulässig ist.

5. Steuerungs-Verfahren, das in einem Kraftfahrzeug basierend auf aus mindestens einem dem Kraftfahrzeug zugeordneten Umfeldsensor gewonnenen Umfelddaten vorausfahrende Kraftfahrzeuge zu erkennen, mit den Schritten:
einer elektronischen Steuerung in dem eigenen Kraftfahrzeug mittels der Umfeldsensoren den Bereich vor dem Kraftfahrzeug wiedergebende Umfelddaten bereitzustellen,
am Verkehr teilnehmende andere Kraftfahrzeuge vor dem eigenen Kraftfahrzeug mit dem mindestens einen Umfeldsensor zu erfassen,
eine jeweilige Position der anderen Kraftfahrzeuge mit dem mindestens einen Umfeldsensor zu bestimmen,
aus einer aktuellen Geschwindigkeit und einer aktuellen Gierrate des eigenen Kraftfahrzeugs eine Trajektorie des eigenen Kraftfahrzeugs zu bestimmen,
ein einziges Kraftfahrzeug aus den anderen Kraftfahrzeugen auszuwählen, das den kürzesten Abstand zu der Trajektorie aufweist, um diesem einzigen Kraftfahrzeug mit dem eigenen Kraftfahrzeug zu folgen,
einen relativen Abstand zwischen dem eigenen Kraftfahrzeug und dem einzigen Kraftfahrzeug zu erfassen;
den Abstand zwischen dem eigenen Kraftfahrzeug und dem einzigen Kraftfahrzeug entsprechend einer Verkehrssituation zu regeln, und
**gekennzeichnet durch** die Schritte:
den jeweiligen kürzesten Abstand der anderen Kraftfahrzeuge zu der Trajektorie des eigenen Kraftfahrzeugs mit dem kürzesten Abstand des einzigen Kraftfahrzeugs zu der Trajektorie des eigenen Kraftfahrzeugs zu vergleichen, und
wenn das Vergleichen ergibt, dass sich ein anderes Kraftfahrzeug näher an der Trajektorie des eigenen Kraftfahrzeugs befindet, dieses auszuwählen um diesem zu folgen und das vorher ausgewählte einzige Kraftfahrzeug für eine mögliche spätere Auswahl zu speichern.

6. Steuerungs-Verfahren nach Anspruch 5, wobei die Trajektorie durch Integration der Geschwindigkeit und der Gierrate über eine vorbestimmte Zeit bestimmt wird.

7. Steuerungs-Verfahren nach Anspruch 5 oder 6, mit dem Schritt:
eine manuelle Eingabe eines Nutzers zu verarbeiten, wobei das einzige Kraftfahrzeug durch die Auswahl eines der anderen Kraftfahrzeuge abgewählt wird, um diesem zu folgen.

8. Steuerungs-Verfahren nach Anspruch 7, mit dem Schritt:
zu entscheiden, ob die manuelle Eingabe des Nutzers zulässig ist.

## Claims

1. Control system configured for use in a motor vehicle and intended to recognize motor vehicles ahead based on surroundings data obtained from at least one surroundings sensor assigned to the motor vehicle, wherein the at least one surroundings sensor is configured to provide the surroundings data representing the region ahead of the motor vehicle to an electronic controller of the control system, and wherein the control system is at least configured and intended
to detect other motor vehicles in the road scene ahead of the ego motor vehicle using the at least one surroundings sensor (S1105),
to determine a respective position of the other motor vehicles using the at least one surroundings sensor (S1110),
to determine a trajectory of the ego motor vehicle from a current speed and a current yaw rate of the ego motor vehicle (S1115),
to select (S1130), from the other motor vehicles, a single motor vehicle that has the shortest distance from the trajectory (S1125) in order to follow this single motor vehicle with the ego motor vehicle,
to detect a relative distance between the ego motor vehicle and the single motor vehicle (51135),
to regulate the distance between the ego motor vehicle and the single motor vehicle in accordance with a traffic situation (S1135),
**characterized in that** the control system is configured and intended
to compare the respective shortest distance of the other motor vehicles from the trajectory of the ego motor vehicle with the shortest distance of the single motor vehicle from the trajectory of the ego motor vehicle, and
when the comparison reveals that another motor vehicle is located closer to the trajectory of the ego motor vehicle, to select this other motor vehicle and to follow it and to store the previously selected single motor vehicle for a possible later selection.

2. Control system according to Claim 1, wherein the trajectory is determined by integrating (S1120) the speed and the yaw rate over a predetermined time.

3. Control system according to Claim 1 or 2, furthermore configured and intended
to process a manual input from a user, wherein the single motor vehicle is deselected through the selection of another one of the motor vehicles in order to follow this other motor vehicle.

4. Control system according to Claim 3, wherein the control system may be designed such that the control system is able to decide whether the manual input from the user is admissible.

5. Control method in a motor vehicle for recognizing motor vehicles ahead based on surroundings data obtained from at least one surroundings sensor assigned to the motor vehicle, comprising the following steps:
providing surroundings data representing the region ahead of the motor vehicle to an electronic controller in the ego motor vehicle by way of the surroundings sensors,
detecting other motor vehicles in the road scene ahead of the ego motor vehicle using the at least one surroundings sensor,
determining a respective position of the other motor vehicles using the at least one surroundings sensor,
determining a trajectory of the ego motor vehicle from a current speed and a current yaw rate of the ego motor vehicle,
selecting, from the other motor vehicles, a single motor vehicle that has the shortest distance from the trajectory in order to follow this single motor vehicle with the ego motor vehicle,
detecting a relative distance between the ego motor vehicle and the single motor vehicle;
regulating the distance between the ego motor vehicle and the single motor vehicle in accordance with a traffic situation, and
**characterized by** the steps of:
comparing the respective shortest distance of the other motor vehicles from the trajectory of the ego motor vehicle with the shortest distance of the single motor vehicle from the trajectory of the ego motor vehicle, and
when the comparison reveals that another motor vehicle is located closer to the trajectory of the ego motor vehicle, selecting this other motor vehicle and following it and storing the previously selected single motor vehicle for a possible later selection.

6. Control method according to Claim 5, wherein the trajectory is determined by integrating the speed and the yaw rate over a predetermined time.

7. Control method according to Claim 5 or 6, comprising the following step:
processing a manual input from a user, wherein the single motor vehicle is deselected through the selection of another one of the motor vehicles in order to follow this other motor vehicle.

8. Control method according to Claim 7, comprising the following step:
deciding whether the manual input from the user is admissible.

## Revendications

1. Système de commande, qui est conçu pour être utilisé dans un véhicule à moteur et qui est destiné à reconnaître des véhicules à moteur qui précèdent en se basant sur des données d'environnement obtenues à partir d'au moins un capteur d'environnement associé au véhicule à moteur, l'au moins un capteur d'environnement étant conçu pour fournir à une commande électronique du système de commande les données d'environnement qui reproduisent la zone devant le véhicule à moteur, et le système de commande étant conçu pour et destiné à
acquérir les autres véhicules à moteur participant à la circulation devant le véhicule à moteur propre avec l'au moins un capteur d'environnement (S1105),
déterminer une position respective des autres véhicules à moteur avec l'au moins un capteur d'environnement (S1110),
déterminer une trajectoire du véhicule à moteur propre à partir d'une vitesse actuelle et d'un taux de lacet actuel du véhicule à moteur propre (S1115),
sélectionner un véhicule à moteur unique parmi les autres véhicules à moteur (S1130), lequel présente la distance la plus courte par rapport à la trajectoire (S1125) afin de suivre ce véhicule à moteur unique avec le véhicule à moteur propre,
acquérir une distance relative entre le véhicule à moteur propre et le véhicule à moteur unique (51135),
réguler la distance entre le véhicule à moteur propre et le véhicule à moteur unique conformément à une situation de circulation (S1135),
**caractérisé en ce que** le système de commande est conçu pour et destiné à
comparer la distance respectivement la plus courte entre les autres véhicules à moteur et la trajectoire du véhicule à moteur propre avec la distance la plus courte entre le véhicule à moteur unique et la trajectoire du véhicule à moteur propre, et
lorsqu'il résulte de la comparaison qu'un autre véhicule à moteur se trouve plus proche de la trajectoire du véhicule à moteur propre, sélectionner celui-ci afin de suivre celui-ci et mémoriser le véhicule à moteur unique sélectionné précédemment pour une éventuelle sélection future.

2. Système de commande selon la revendication 1, la trajectoire étant déterminée par intégration (S1120) de la vitesse et du taux de lacet sur une durée prédéterminée.

3. Système de commande selon la revendication 1 ou 2, lequel est en outre conçu pour et destiné à traiter une saisie manuelle d'un utilisateur, le véhicule à moteur unique étant désélectionné par la sélection de l'un des autres véhicules à moteur en vue de suivre celui-ci.

4. Système de commande selon la revendication 3, le système de commande étant configuré de telle sorte que le système de commande peut décider si la saisie manuelle de l'utilisateur est autorisée.

5. Procédé de commande, pour reconnaître, dans un véhicule à moteur, des véhicules à moteur qui précèdent en se basant sur des données d'environnement obtenues à partir d'au moins un capteur d'environnement associé au véhicule à moteur, comprenant les étapes suivantes :
fournir à une commande électronique dans le véhicule à moteur propre, au moyen des capteurs d'environnement, des données d'environnement qui reproduisent la zone devant le véhicule à moteur,
acquérir les autres véhicules à moteur participant à la circulation devant le véhicule à moteur propre avec l'au moins un capteur d'environnement,
déterminer une position respective des autres véhicules à moteur avec l'au moins un capteur d'environnement,
déterminer une trajectoire du véhicule à moteur propre à partir d'une vitesse actuelle et d'un taux de lacet actuel du véhicule à moteur propre,
sélectionner un véhicule à moteur unique parmi les autres véhicules à moteur, lequel présente la distance la plus courte par rapport à la trajectoire afin de suivre ce véhicule à moteur unique avec le véhicule à moteur propre, acquérir une distance relative entre le véhicule à moteur propre et le véhicule à moteur unique,
réguler la distance entre le véhicule à moteur propre et le véhicule à moteur unique conformément à une situation de circulation, et
**caractérisé par** les étapes suivantes :
comparer la distance respectivement la plus courte entre les autres véhicules à moteur et la trajectoire du véhicule à moteur propre avec la distance la plus courte entre le véhicule à moteur unique et la trajectoire du véhicule à moteur propre, et
lorsqu'il résulte de la comparaison qu'un autre véhicule à moteur se trouve plus proche de la trajectoire du véhicule à moteur propre, sélectionner celui-ci afin de suivre celui-ci et mémoriser le véhicule à moteur unique sélectionné précédemment pour une éventuelle sélection future.

6. Procédé de commande selon la revendication 5, la trajectoire étant déterminée par intégration de la vitesse et du taux de lacet sur une durée prédéterminée.

7. Procédé de commande selon la revendication 5 ou 6, comprenant l'étape suivante :
traiter une saisie manuelle d'un utilisateur, le véhicule à moteur unique étant désélectionné par la sélection de l'un des autres véhicules à moteur en vue de suivre celui-ci.

8. Procédé de commande selon la revendication 7, comprenant l'étape suivante :
décider si la saisie manuelle de l'utilisateur est autorisée.
